# EUROPÄISCHE PATENTSCHRIFT

(11) **EP 3 409 811 B1**
(45) Veröffentlichungstag und Bekanntmachung des Hinweises auf die Patenterteilung: **30.09.2020**
(21) Anmeldenummer: 18169697.2
(22) Anmeldetag: 27.04.2018
(51) Int. Cl.: C22F 1/04, B21B 37/00, C21D 9/46, C21D 9/56

(54) **VERFAHREN ZUR REGELUNG DER AUFWICKELTEMPERATUR EINES METALLBANDES**
METHOD FOR CONTROLLING THE COILING TEMPERATURE OF A METAL STRIP
PROCÉDÉ DE RÉGLAGE DE LA TEMPÉRATURE D'ENROULEMENT D'UNE BANDE MÉTALLIQUE

(30) Priorität: 29.05.2017 AT 504502017
(43) Veröffentlichungstag der Anmeldung: 05.12.2018
(73) Patentinhaber: Andritz AG, 8045 Graz (AT)
(72) Erfinder: HOFBAUER, Thomas, 2340 Mödling (AT); LEEBER, Florian, 1020 Wien (AT); KAUTZ, Walter, 3040 Neulengbach (AT); FEIN, Martin, 1020 Wien (AT)
(74) Vertreter: Tschinder, Thomas

(56) Entgegenhaltungen:
- WO-A1-97/22724
- CN-A- 100 998 995
- JP-A- H02 209 457
- JP-A- 2001 026 851
- JP-A- 2015 066 587

## Beschreibung

Den Gegenstand dieser Erfindung bildet ein Verfahren zum Aufwickeln eines Metallbandes, wobei das Metallband direkt vor dem Aufwickeln in einem Ofen wärmebehandelt, mit einer Auslaufgeschwindigkeit einer Aufhaspel zugeführt und dort mit einer festgelegten Temperatur warm aufgewickelt wird. Bei der Herstellung von Metallbändern hat es sich für gewisse Metalle und Metalllegierungen als sehr nützlich erwiesen, wenn diese warm aufgewickelt werden. Dieser Bandbehandlungsschritt, auch als Preaging bezeichnet, erfolgt beispielsweise am Ende von modernen Glühlinien für Aluminiumbänder. Dabei werden die Bänder durch Nachheizen in einem Preaging-Ofen erwärmt. Dies ermöglicht so ein temperiertes Aufwickeln. Durch das temperierte Aufwickeln und durch das langsame Abkühlen des Bundes lassen sich die Materialeigenschaften des Metallbandes verbessern, dabei ist es sehr wichtig, dass das Metallband bei einer möglichst exakt mit der definierten Temperatur aufgewickelt wird.

Die JP 2001 026851 A beschreibt ein Verfahren zur Regelung der Aufwickeltemperatur eines Aluminiumbandes. Dabei soll das Problem unterschiedlicher Aufwickeltemperaturen behoben werden, die beispielsweise durch unterschiedliche Temperaturen in der Produktionshalle hervorgerufen werden. Gelöst wird dieses Problem durch eine Abdeckung, die das Band von einer Kühlvorrichtung bis zur Aufwicklung umgeben soll und in der unter anderem die Temperatur geregelt wird. Die Metallbänder werden in der Regel in Form von Bünden der Glühlinie zugeführt, abgewickelt und am Ende der Linie wieder aufgewickelt. Damit in der Glühlinie ein kontinuierlicher Betrieb ermöglicht wird, wird das Ende des vorherigen Bandes mit dem Anfang des nachfolgenden Bandes verbunden, nachfolgend als Bandverbindung bezeichnet zum Beispiel verschweißt oder zusammengeheftet (gestitcht). Das Aufwickeln der Metallbänder am Ende der Linie kann mit einer hohen Geschwindigkeit erfolgen, hier sind Auslaufgeschwindigkeiten im Bereich von 200 m/min möglich, für einen Bundwechsel und für das Durchtrennen des Metallbandes muss die Auslaufgeschwindigkeit jedoch erheblich reduziert werden, teilweise müssen die Metallbänder auch kurzzeitig angehalten werden, zum Beispiel zum Einstellen der Besäumschere. Damit das Metallband den Glühofen trotzdem kontinuierlich mit einer konstanten Geschwindigkeit durchlaufen kann, ist vor und nach dem Glühofen ein Bandspeicher (Looper) angeordnet, der die unterschiedlichen Ein- und Auslaufgeschwindigkeiten des Metallbandes abpuffert.

Wie bereits oben erwähnt, ist in der Auslaufsektion häufig auch ein weiterer Ofen angeordent, der auch Preaging Ofen genannt wird. Dieser Ofen wird in Fachkreisen auch als Bake-hardening Furnace, Pre-Bake Furnace, Reheating Furnace oder als Paint-bake Furnace bezeichnet. Dort wird das Metallband erwärmt, beispielsweise auf eine Temperatur zwischen 50°C und 150°C, sodass es mit einer festgelegten Temperatur aufgewickelt werden kann. Durch die wechselnde Auslaufgeschwindigkeit ändern sich auch die Verweilzeiten des Metallbandes im Preaging Ofen und somit auch dessen Temperatur. In existierenden Anlagen wird daher die Bandtemperatur kurz vor der Aufhaspel gemessen und anhand der dort gemessenen Temperatur wird der Preaging-Ofen geregelt, sodass die Bandtemperatur an der Aufhaspel möglichst konstant bleibt.

Mit dieser Regelung kann jedoch die Bandtemperatur nur auf +/- 10°C konstant gehalten werden, weil der Ofen recht träge reagiert. Die damit erreichbare Bandtemperaturgenauigkeit ist jedoch für einige Anwendungen zu ungenau, da eine Abweichung von 1 bis 2 °C schon eine Auswirkung auf die Materialeigenschaften haben kann.

Der Erfindung liegt daher die Aufgabe zugrunde, ein Verfahren bereitzustellen, mit dem die Bandtemperatur beim Aufwickeln genauer geregelt werden kann.

Gelöst wird diese Aufgabe durch ein Aufwickelverfahren des Anspruchs 1 bei dem über ein prädiktives Modell die zukünftige Auslaufgeschwindigkeit des Metallbandes und die Wärmeverluste des Metallbandes zwischen dem Ofen und der Aufhaspel berechnet werden, wobei dann der Ofen so geregelt wird, dass das Metallband bei der festgelegten Temperatur mit einer maximalen Abweichung von +/- 5°C aufgewickelt wird.

Durch diese vorrausschauende Modellierung wird also bereits die zukünftige Auslaufgeschwindigkeit des Metallbandes und die von der Auslaufgeschwindigkeit abhängenden Wärmeverluste vor der Aufhaspel herangezogen, um den Ofen noch vor einer Änderung der Auslaufgeschwindigkeit anzusteuern. Durch dieses vorzeitige Eingreifen ins System, lässt sich die Auslauftemperatur sehr genau einhalten, idealerweise sogar auf weniger als +/- 2 °C genau.

Meist wird im Ofen das Metallband mit Hilfe von heißer Luft, die über Ventilatoren auf das Metallband geblasen wird, erwärmt. Durch die Änderung der Lufttemperatur, beispielsweise durch die Änderung der Brennerleistung oder über die Änderung der Ventilatordrehzahl kann die gewünschte Wärmemenge auf das Band übertragen und somit die Bandtemperatur geregelt werden.

Es ist auch denkbar, dass der Ofen die Wärme durch Strahlung (z.B. Infrarotstrahler) oder über elektromagnetische Effekte (Z.B. Wirbelströme, Induktion) auf das Metallband überträgt. Die Regelung dieser Öfen könnte dann ganz einfach über die zugeführte elektrische Leistung erfolgen.

Das erfindungsgemäße Verfahren eignet sich besonders gut für Aluminiumbänder.

Vorzugsweise wird durch das prädiktive Modell auch die Auslaufgeschwindigkeit des Metallbandes gesteuert, sodass dadurch immer ein optimaler Füllstand im Bandspeicher eingehalten wird.

Im prädiktiven Modell werden vorzugsweise folgende Parameter für die Regelung der Bandtemperatur berücksichtigt:
- die festgelegte Aufhaspeltemperatur
- die Produktionsgeschwindigkeit
- die Auslaufgeschwindigkeit des Metallbandes
- die Banddicke
- die Bandbreite
- der Auslaufbandspeicherfüllstand
- die Bandtemperatur am Eintritt in den Ofen (Preaging Ofen)
- die Bandtemperatur am Austritt des Ofens
- die Bandtemperatur am Austritt des PMT (Peak Metal Temperature)-Trockners/Ofens
- die Umgebungslufttemperatur im Auslaufbereich
- die Bandlängen zwischen dem PMT-Trockner, dem Ofen und der Aufhaspel
- die Schrottlängen, die vor und nach der Bandverbindung herausgeschnitten werden müssen
- die Anzahl der Proben, die vor und nach der Bandverbindung herausgeschnitten werden müssen
- die Position der Bandverbindung
- die Temperatur an der Umlenkrolle vor dem Aufhaspel
- bei mehreren Aufhaspeln: welcher Aufhaspel in Verwendung ist

Selbstverständlich müssen nicht alle diese Parameter vom Modell berücksichtigt werden.

Zusätzlich zur Steuerung der Aufhaspeltemperatur des Metallbandes können vorzugsweise auch folgende Parameter durch das prädiktive Modell gesteuert werden:
- die Auslaufgeschwindigkeit des Metallbandes
- die Temperatur im Ofen
- der Wärmeübertrag im Ofen
- der Auslaufbandspeicherfüllstand
- die Bandtemperatur am Eintritt zum Ofen, wenn ein PMT-Trockner vorhanden ist
- die Bandtemperatur am Austritt des Ofens
- die Bandtemperatur am Austritt des PMT-Trockners, wenn vorhanden
- die Abkühlung des Ofens durch die Regelung der Zufuhr von Umgebungsluft zum Ofen

Im Folgenden wird die Erfindung an einem Ausführungsbeispiel beschrieben.

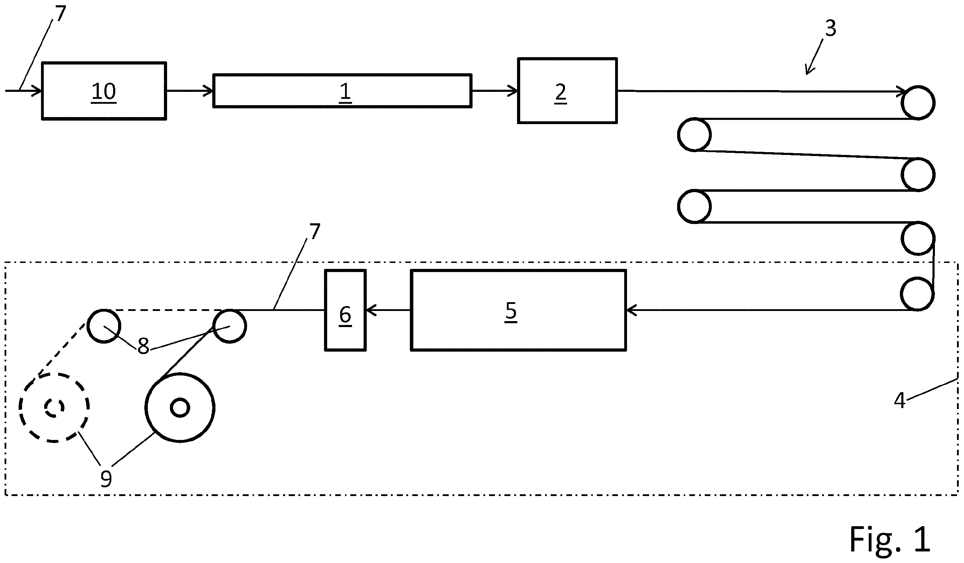

In Fig. 1 ist ein Teil einer Glühlinie dargestellt. Das Metallband 7 durchläuft dabei einen Glühofen 10, eine chemische Behandlungssektion (Beizsektion) 1 und einen PMT-Trockner 2 (Peak Metal Temperature Trockner) mit konstanter Geschwindigkeit (Prozessgeschwindigkeit). Die Prozessgeschwindigkeit liegt im Bereich von 120 m/min. Dem Bandspeicher 3 wird das Metallband 7 kontinuierlich mit konstanter Geschwindigkeit zugeführt und es verlässt diesen mit einer Auslaufgeschwindigkeit, die sich im Betrieb ändert. Im normalen Ablauf des Bundwechsels muss die Bandgeschwindigkeit beispielsweise von Prozessgeschwindigkeit (120 m/min) auf Schneidegeschwindigkeit (30 m/min), Schrottschneidegeschwindigkeit (50 m/min) und auf Einfädelgeschwindigkeit (30 m/min) reduziert werden. Während dieses Zeitraums wird der Auslaufbandspeicher 3 gefüllt. Im Anschluss wird der Auslaufbandspeicher 3 bei Überholgeschwindigkeit (160-200 m/min) geleert, bevor die Auslaufgeschwindigkeit wieder auf Prozessgeschwindigkeit (120 m /min) reduziert wird.

In der Auslaufsektion wird das Metallband 7 in einem Ofen 5 erwärmt, über eine Umlenkrolle 8 geführt und der Aufhaspel 9 zugeführt. Dort wird das Metallband 7 bei einer festgelegten Temperatur warm aufgewickelt. Diese festgelegte Temperatur liegt im Bereich von 40°C bis 150°C, vorzugsweise im Bereich von 50°C bis 130°C. Für einen Bundwechsel wird die Bandgeschwindigkeit reduziert und das Metallband mit der Auslaufschere 6 durchtrennt. Der neue Bandanfang wird dann über eine zweite Aufhaspel 9, die sich hinter der ersten Aufhaspel 9 befindet, warm aufgewickelt.

Um nun die festgelegte Temperatur bei der Aufhaspel möglich genau einhalten zu können, wird über das prädiktive Modell die zukünftige Auslaufgeschwindigkeit des Metallbandes und die Wärmeverluste des Metallbandes zwischen dem Ofen 5 und der Aufhaspel 9 berechnet. Der Ofen 5 wird dann so geregelt, dass das Metallband bei der festgelegten Temperatur mit einer maximalen Abweichung von +/- 5°C aufgewickelt wird. Die vorausschauende Betrachtung der Bundverbindung (z.B. Heftnaht oder Schweißnaht) erlaubt eine vorrausschauende Modellierung der Auslaufgeschwindigkeit, des Auslaufspeicherfüllstandes, der Bandtemperatur am Austritt des Ofens 5 und der Aufhaspeltemperatur unter Berücksichtigung der Wärmeverluste zwischen Ofenaustritt und Aufhaspel 9.

## Patentansprüche

1. Verfahren zum Aufwickeln eines Metallbandes (7), wobei das Metallband (7) direkt vor dem Aufwickeln in einem Ofen (5) wärmebehandelt und mit einer Auslaufgeschwindigkeit einer Aufhaspel (9) zugeführt und dort mit einer festgelegten Temperatur warm aufgewickelt wird, **dadurch gekennzeichnet, dass** über eine vorausschauende Modellierung, die zukünftige Auslaufgeschwindigkeit des Metallbandes (7) und die Wärmeverluste des Metallbandes (7) zwischen dem Ofen (5) und der Aufhaspel (9) berechnet werden, um den Ofen (5) noch vor Änderung der Auslaufgeschwindigkeit anzusteuern und dass dann der Ofen (5) über die Änderung der Brennerleistung oder über die Änderung der Ventilatordrehzahl oder über die zugeführte elektrische Leistung geregelt wird, sodass das Metallband (7) bei der festgelegten Temperatur mit einer maximalen Abweichung von +/- 5°C aufgewickelt wird.

2. Verfahren nach Anspruch 1, **dadurch gekennzeichnet, dass** das Metallband (7) mit einer maximalen Abweichung von +/- 2°C von der festgelegten Temperatur aufgewickelt wird.

3. Verfahren nach Anspruch 1 oder 2, **dadurch gekennzeichnet, dass** im Ofen (5) das Metallband (7) mit Hilfe von heißer Luft, die über Ventilatoren auf das Metallband (7) geblasen wird, erwärmt wird und dass der Ofen (5) über die Änderung der Lufttemperatur oder über die Änderung der Ventilatordrehzahl geregelt wird.

4. Verfahren nach einem der Ansprüche 1 bis 3, **dadurch gekennzeichnet, dass** ein Aluminiumband aufgewickelt wird.

5. Verfahren nach einem der Ansprüche 1 bis 4, **dadurch gekennzeichnet, dass** die festgelegte Temperatur beim Aufwickeln im Bereich von 40°C bis 150°C, vorzugsweise im Bereich von 50°C bis 130°C festgelegt wird.

6. Verfahren nach einem der Ansprüche 1 bis 5, **dadurch gekennzeichnet, dass** die vorausschauende Modellierung die Banddicke und die Bandbreite berücksichtigt.

7. Verfahren nach einem der Ansprüche 1 bis 6, **dadurch gekennzeichnet, dass** die Aufwickeltemperatur des Metallbandes (7) gemessen und von der vorausschauenden Modellierung für die Regelung des Ofens (5) berücksichtigt wird.

8. Verfahren nach einem der Ansprüche 1 bis 7, **dadurch gekennzeichnet, dass** die Umgebungslufttemperatur zwischen Ofen (5) und Aufhaspel (9) gemessen und von der vorausschauenden Modellierung für die Regelung des Ofen (5) berücksichtigt wird.

9. Verfahren nach einem der Ansprüche 1 bis 8, **dadurch gekennzeichnet, dass** die Bandtemperatur vor dem Eintritt in den Ofen (5) und/oder nach dem Austritt aus dem Ofen (5) gemessen und von der vorausschauenden Modellierung für die Regelung des Ofens (5) berücksichtigt wird.

10. Verfahren nach einem der Ansprüche 1 bis 9, **dadurch gekennzeichnet, dass** durch die vorausschauende Modellierung die Auslaufgeschwindigkeit des Metallbandes (7) gesteuert wird.

## Claims

1. Method for coiling a metal strip (7), where the metal strip (7) is heat-treated in a furnace (5) immediately before the coiling process, fed to a coiler (9) at an outlet speed, and coiled there in a warm state at a defined temperature, **characterized in that** the future outlet speed of the metal strip (7) and the heat losses from the metal strip (7) between the furnace (5) and the coiler (9) are calculated using predictive modelling in order to activate the furnace (5) before the outlet speed is changed, and **in that** the furnace (5) is then controlled by the change in burner output or change in fan speed or the electric power supplied so that the metal strip (7) is coiled at the defined temperature with a maximum deviation of +/-5°C.

2. Method according to claim 1, **characterized in that** the metal strip (7) is coiled with a maximum deviation of +/-2°C from the defined temperature.

3. Method according to claim 1 or 2, **characterized in that** the metal strip (7) is heated in the furnace (5) using hot air that is blown onto the metal strip (7) by fans and that the furnace (5) is controlled by changing the air temperature or the fan speed.

4. Method according to one of claims 1 to 3, **characterized in that** an aluminium strip is coiled.

5. Method according to one of claims 1 to 4, **characterized in that** the defined temperature during coiling is set in a range of 40°C to 150°C, preferably in a range of 50°C to 130°C.

6. Method according to one of claims 1 to 5, **characterized in that** the predictive modelling takes the strip thickness and the strip width into consideration.

7. Method according to one of claims 1 to 6, **characterized in that** the coiling temperature of the metal strip (7) is measured and taken into consideration by the predictive modelling for control of the furnace (5).

8. Method according to one of claims 1 to 7, **characterized in that** the ambient air temperature between furnace (5) and coiler (9) is measured and taken into consideration by the predictive modelling for control of the furnace (5).

9. Method according to one of claims 1 to 8, **characterized in that** the strip temperature before entering the furnace (5) and/or after leaving the furnace (5) is measured and taken into consideration by the predictive modelling for control of the furnace (5).

10. Method according to one of claims 1 to 9, **characterized in that** the outlet speed of the metal strip (7) is controlled by the predictive modelling.

## Revendications

1. Procédé d'enroulement d'une bande de métal (7), la bande de métal (7) étant, directement avant l'enroulement, soumise à un traitement thermique dans un four (5) et étant amenée à une vitesse de sortie jusqu'à un enrouleur (9) où elle est enroulée à chaud à une température définie, **caractérisé en ce que** la vitesse de sortie à venir de la bande de métal (7) et la perte de chaleur de la bande de métal (7) entre le four (5) et l'enrouleur (9) sont calculées par une modélisation prévue, pour commander le four (5) juste avant le changement de la vitesse de sortie et **en ce que** le four (5) est ensuite réglé par le changement de la puissance de brûleur ou par le changement de la vitesse du ventilateur ou par la puissance électrique amenée, de sorte que la bande de métal (7) soit enroulée à la température prédéfinie selon un écart maximal de +/-5°C.

2. Procédé selon la revendication 1, **caractérisé en ce que** la bande de métal (7) est enroulée avec un écart maximal de +/- 2°C de la température définie.

3. Procédé selon la revendication 1 ou 2, **caractérisé en ce que** dans le four (5) la bande de métal (7) est chauffée à l'aide d'air chaud, qui est soufflé par des ventilateurs sur la bande de métal (7) et **en ce que** le four (5) est réglé par le changement de la température de l'air ou par le changement de la vitesse de ventilateur.

4. Procédé selon l'une des revendications 1 à 3, **caractérisé en ce qu'**une bande d'aluminium est enroulée.

5. Procédé selon l'une des revendications 1 à 4, **caractérisé en ce que** la température définie est déterminée lors de l'enroulement dans une plage comprise entre 40°C et 150°C, de préférence dans une plage comprise entre 50°C et 130°C.

6. Procédé selon l'une des revendications 1 à 5, **caractérisé en ce que** la modélisation prévue prend en compte l'épaisseur et la largeur de la bande.

7. Procédé selon l'une des revendications 1 à 6, **caractérisé en ce que** la température d'enroulement de la bande de métal (7) est mesurée et prise en compte par la modélisation prévue pour le réglage du four (5).

8. Procédé selon l'une des revendications 1 à 7, **caractérisé en ce que** la température de l'air ambiant entre le four (5) et l'enrouleur (9) est mesurée et prise en compte par la modélisation prévue pour le réglage du four (5) .

9. Procédé selon l'une des revendications 1 à 8, **caractérisé en ce que** la température de la bande est mesurée avant l'entrée dans le four (5) et/ou à la sortie du four (5) et prise en compte par la modélisation prévue pour le réglage du four (5).

10. Procédé selon l'une des revendications 1 à 9, **caractérisé en ce que** la modélisation prévue permet de commander la vitesse de sortie de la bande métallique (7).
